# EUROPEAN PATENT APPLICATION

(11) **EP 2 693 655 A1**
(43) Date of publication of application: **05.02.2014**
(21) Application number: 12360058.7
(22) Date of filing: 03.08.2012
(51) Int. Cl.: H04B 7/02, H04L 25/03

(54) **Coordinated multipoint transmissions**

(71) Applicant: Alcatel Lucent, 75007 Paris (FR)
(72) Inventor: Zhang, Min, Swindon, Wiltshire SN5 7DJ (GB); Baker, Matthew P J, Canterbury, Kent CT2 9DB (GB); Cheng, Fang-Chen, Randolph, New Jersey 07869 (US)
(74) Representative: Script IP Limited

(57) **Abstract**

A method of facilitating coordinated multipoint downlink transmissions by base stations, a base station and a computer program product are disclosed. The method comprises: transmitting a message between the base stations, the message indicating a utilisation associated with at least one precoder for the downlink transmissions by at least one of the base stations. Providing an indication of the utilization provides a framework to significantly improve the efficiency of transmissions between base stations and facilitate the coordination of multipoint downlink transmissions since only information about the utilization of particular precoders needs to be sent which avoids the need to transmit the precoders themselves, thereby reducing the quantity of data to be transmitted.

## Description

### FIELD OF THE INVENTION

The present invention relates to a method of facilitating coordinated multipoint downlink transmissions by base stations, a base station and a computer program product.

### BACKGROUND

Coordinating multipoint downlink transmissions by base stations is known. In one scheme, known as coordinated scheduling, the coordination of transmission powers and of resource algorithms occurs between base stations in order to reduce interference. In coordinated scheduling, signalling known as relative narrowband transmit power (RNTP) indicators are provided across the X2 interface between base stations. The relative narrowband transmit power indicator consists of a bitmap with as many bits as physical resource blocks (PRBs) in the frequency domain; each bit indicates whether the base station sending the relative narrowband transmit power indicator intends to keep the transmission power in the corresponding physical resource block below a threshold or whether the base station makes no such commitment about the transmission power in that physical resource block.

Another coordinated multipoint downlink transmission scheme is coordinated beamforming where the transmit-side precoding applied to downlink transmissions is coordinated between transmission points in order to reduce interference between the coverage areas of the different transmission points.

Although providing for coordinated beamforming assists in improving reception and extraction of data at user equipment, unexpected consequences can occur.

Accordingly, it is desired to provide an improved technique for coordinated multipoint transmissions.

### SUMMARY

According to a first aspect, there is provided a method of facilitating coordinated multipoint downlink transmissions by base stations of a wireless telecommunications network, the method comprising: transmitting a message between the base stations, the message indicating a utilisation associated with at least one precoder for the downlink transmissions by at least one of the base stations.

The first aspect recognizes that a problem with providing signalling for the coordination of precoders between base stations for coordinated beamforming in order to reduce interference is that the signalling overhead may become significantly greater compared to that of, for example, coordinated scheduling, due to the fact that a single bit is unlikely to be sufficient to indicate the precoding information. Accordingly, the amount of signalling overhead over, for example, an X2 interface, would rapidly become prohibitive to support such coordination.

Accordingly, a method of facilitating coordinated multipoint downlink transmissions transmitted by base stations of a wireless telecommunications network may be provided. The method may comprise the step of transmitting a message between the base stations. The message may indicate a utilization indicator associated with one or more precoders for downlink transmissions by one or more of the base stations.

Accordingly, a utilization indicator for precoders may be provided by base stations in order to indicate the utilization of those precoders for downlink transmissions. Providing an indication of the utilization provides a framework to significantly improve the efficiency of transmissions between base stations and facilitate the coordination of multipoint downlink transmissions since only information about the utilization of particular precoders needs to be sent which avoids the need to transmit the precoders themselves, thereby reducing the quantity of data to be transmitted.

In one embodiment, the message is transmitted from the first base station. Accordingly, the message indicating the utilization associated with precoders for downlink transmissions by a first base station may be transmitted by at first base station. Accordingly, the first base station may indicate its precoder utilizations, this information regarding may be used by other base stations will when selecting their precoders. In particular, other base stations may use the precoder utilisation to estimate interfering transmissions from the first base station when making scheduling decisions.

In one embodiment, the message is a broadcast message from the first base station. Accordingly, the message transmitted by the first base station may be a broadcast message which may be receivable by all recipient base stations. This provides an efficient mechanism for the first base station to indicate the utilization to other base stations.

In one embodiment, the utilisation indicates a likelihood of the at least one precoder being utilised by the first base station for the downlink transmissions. Accordingly, a likelihood or probability of one or more precoders being utilized by the first base station may be indicated. This provides an indication of such likely utilization to other base stations and therefore indicates how likely it is that those precoders may be used to generate interfering transmissions to other base stations.

In one embodiment, the utilisation indicates that the at least one precoder is likely to be utilised by the first base station for the downlink transmissions.

In one embodiment, the utilisation indicates the at least one precoder will be utilised by the first base station for the downlink transmissions. Accordingly, the first base station may indicate those precoders which will actually be used by that first base station for downlink transmissions to generate interfering transmissions to other base stations which would make a scheduling decision thereafter based on estimated interference from the first base station.

In one embodiment, the utilisation indicates that the at least one precoder is unlikely to be utilised by the first base station for the downlink transmissions. Accordingly, the first base station may indicate those decoders that are unlikely or have a low probability of being used by the first base station to generate interfering transmissions to other base stations which would make a scheduling decision thereafter based on estimated interference from the first base station..

In one embodiment, the utilisation indicates the at least one precoder will not be utilised by the first base station for the downlink transmissions. Accordingly, the first base station may indicate those precoders that will actually not be used by the first base station to generate interfering transmissions to other base stations which would make a scheduling decision thereafter based on estimated interference from the first base station.

In one embodiment, the message is transmitted from a first base station to a second base station. Accordingly, the message may be directed to a specified a particular second base station in order to reduce traffic to and processing required by other base stations.

In one embodiment, the utilisation indicates that use of the at least one precoder by the second base station for the downlink transmissions is to be avoided. Accordingly, the message may indicate to the second base station those precoders which should be avoided or not utilized by that second base station.

In one embodiment, the utilisation indicates that use of the at least one precoder by the second base station for the downlink transmissions is advisable. Accordingly, those precoders which it is advisable or preferred that the second base station should use for downlink transmissions may be indicated in the message.

In one embodiment, the method comprises the step of adapting selection of precoders utilised by a second base station based on the message. Accordingly, the second base station may adapt or change the precoders used for downlink transmission based on the utilization indicated by the message. This helps to improve coordination between the base stations.

In one embodiment, the method comprises the step of transmitting an acknowledgement message from the second base station in response to the message, the acknowledgement message indicating a utilisation associated with the at least one precoder for the downlink transmissions by the second base station. Accordingly, the second base station may indicate to the first base station its utilization of precoders for downlink transmissions.

In one embodiment, the utilisation indicates that use of the at least one precoder by the second base station for the downlink transmissions will be avoided. Accordingly, the second base station may indicate those precoders that it intends not to use.

In one embodiment, the utilisation indicates the at least one precoder will be utilised by the second base station for the downlink transmissions. Accordingly, the second base station may indicate to the first base station those precoders that it intends to use.

In one embodiment, the method comprises the step of adapting selection of precoders utilised by the first base station based on the acknowledgement message. Accordingly, the first base station may further adapt or change its selection of precoders based on the information about the use of precoders in the second base station provided by the acknowledgment message. Again, this helps to improve the coordinated multipoint transmissions.

In one embodiment, at least one of the message and the acknowledgement message comprises at least one of a cell identifier, a time interval and a frequency component associated with the utilisation associated with the at least one precoder. Accordingly, the message and/or the acknowledgment message may include a cell identifier and/or a time interval and/or a frequency component associated with the utilization of precoders. For example, the message or acknowledgment message may indicate which precoders utilized by specific sub bands in each subframe or group of subframes.

In one embodiment, the message and/or the acknowledgment message may indicate that these precoders will be utilized for a particular period of time or that they may continue to be utilized until an update is provided.

According to a second aspect, there is provided a base station operable to facilitate coordinated multipoint downlink transmissions, the base station comprising: transmission logic operable to transmit a message, the message indicating a utilisation associated with at least one precoder for the downlink transmissions by the base station.

In one embodiment, the message is a broadcast message.

In one embodiment, the utilisation indicates a likelihood of the at least one precoder being utilised by the base station for the downlink transmissions.

In one embodiment, the utilisation indicates that the at least one precoder is likely to be utilised by the base station for the downlink transmissions.

In one embodiment, the utilisation indicates the at least one precoder will be utilised by the base station for the downlink transmissions.

In one embodiment, the utilisation indicates that the at least one precoder is unlikely to be utilised by the base station for the downlink transmissions.

In one embodiment, the utilisation indicates the at least one precoder will not be utilised by the base station for the downlink transmissions.

In one embodiment, the message is transmitted to a second base station.

In one embodiment, the utilisation indicates that use of the at least one precoder by the second base station for the downlink transmissions is to be avoided.

In one embodiment, the utilisation indicates that use of the at least one precoder by the second base station for the downlink transmissions is advisable.

In one embodiment, the base station comprises reception logic operable to receive an acknowledgement message from the second base station in response to the message, the acknowledgement message indicating a utilisation associated with the at least one precoder for the downlink transmissions by the second base station.

In one embodiment, the utilisation indicates that use of the at least one precoder by the second base station for the downlink transmissions will be avoided.

In one embodiment, the utilisation indicates the at least one precoder will be utilised by the second base station for the downlink transmissions.

In one embodiment, the base station comprises adaption logic operable to adapt selection of precoders utilised by the base station based on the acknowledgement message.

In one embodiment, at least one of the message and the acknowledgement message comprises at least one of a cell identifier, a time interval and a frequency component associated with the utilisation associated with the at least one precoder.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates transmission of messages between base stations according to one embodiment; and
Figure 2 an arrangement of precoder indicators encoded in messages according to one embodiment.

### DESCRIPTION OF THE EMBODIMENTS

### Overview

Before discussing the embodiments in any more detail, first an overview will be provided. In coordinated multipoint transmissions using coordinated beamforming, knowledge of the channel state, the thermal noise and the precoders being used by potentially interfering transmissions can assist in the selection of a precoder for another transmission on the same frequency by enable the selection of a precoder which maximizes the signal to be decoded. Accordingly, it can be seen that sharing precoder information between base stations will assist those base stations in the appropriate selection of a precoder to minimize interference with other transmissions and maximize the decoding of the signal being transmitted.

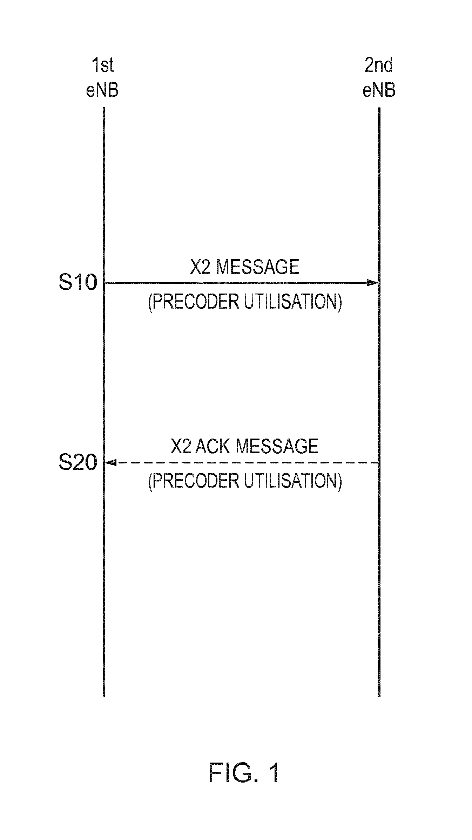

Embodiments provide a technique for efficiently exchanging information between base stations to improve coordinated multipoint downlink transmissions from those base stations. Instead of transmitting parameter details for every downlink transmission precoder [which is likely to require significant bandwidth to support the transmission of this information], instead, as shown in Figure 1, a message is transmitted at step S10 which includes an indication of the utilization of precoders. This significantly improves the flexibility of the information that is provided which reduces the amount of information that needs to be transmitted and increases the efficiency by reducing the bandwidth required to support these messages. Also, in embodiments, rather than transmitting information relating to the precoders or the precoder vectors themselves, instead an index to a table storing details of those precoder parameters is provided. Again, this significantly reduces the amount of data to be transmitted and therefore improves the efficiency of these messages.

Optionally, base stations which receive the message may respond, at step S20, with an acknowledgement message also indicating an indication of the utilization of precoders. This enables both the base stations to make a good assessment of the precoders likely to be in use and assists those base stations in planning their precoder utilisation.

### Example 1 - Precoders to Avoid

The first base station indicates, by transmitting a message over the X2 interface (as indicated by step S10 in Figure 1), one or more precoders that should be avoided by the second base station. Typically, these precoders are based on "per channel state information resource signal (CSI-RS)-Resource" feedback from user equipment served by the first base station (i.e. those precoders which are most likely to result in making the decoding of the transmitted signals more difficult). In this example, the reception performance of user equipment served by the first base station can be helped, if the second base station follows the recommendation/request to avoid the indicated precoder(s). The message may specify that the second base station "shall" or "must" avoid the indicated precoder(s).

Acknowledgement signalling may be provided from the second base station to the first base station (as indicated by step S20 in Figure 1) indicating whether the second base station intends to avoid the indicated precoder(s) or not. This acknowledgement can help the first base station to determine a suitable Modulation and Coding Scheme (MCS). For example, if the second base station agreed to avoid the indicated precoder(s), then the first base station could choose a higher MCS than if the second base station did not agree to avoid the indicated precoder(s). Alternatively, no signalling or specification of the second base station behaviour may occur.

Typically, the message should be directed to a specific cell under the control of the second base station - i.e. if the second base station controls more than one cell, then the message should further include an indication of the cell identifier which is requested to avoid the indicated precoder(s). Also, the message may include multiple precoders to avoid. In a first example, the message may indicate the worst companion precoder of multiple user equipment if multiple user equipment would be scheduled simultaneously in the same time-frequency resource by the first base station, using multiuser multiple input multiple output (MU-MIMO). In a second example, the message may indicate the most commonly indicated worst companion precoders of one or more frequently-scheduled or likely-to-be-scheduled user equipment.

### Example 2 - Precoders to Use

The first base station indicates, by transmitting a message over the X2 interface (as indicated by step S10 in Figure 1), one or more precoders that are available or recommended to be used by the second base station. For example, the message indicates precoders that are not indicated as "worst companions" by user equipment served by the first base station, and/or precoders that are indicated as "best companions". Typically, these precoders are those which minimise interference from the second base station by user equipment served by the first base station. In this example, the reception performance of user equipment served by the first base station can be helped if the second base station follows the recommendation/request to use only the indicated precoder(s). It will be appreciated that the set of precoders indicated in this example could be the complement of the set of precoders that would be indicated using example 1.

Acknowledgement signalling may be provided from the second base station to the first base station (as indicated by step S20 in Figure 1) indicating whether the second base station intends to use the indicated precoder(s) or not. Although this step is not essential, it could help the first base station to determine a suitable MCS. For example, if the second base station agrees to use the indicated precoder(s), then the first base station could choose a higher MCS than if the second base station decided to avoid the indicated precoder(s). Alternatively, no signalling or specification of the second base station behaviour could occur.

Typically, this signalling should be directed to a specific cell under the control of the second base station - i.e. if the second base station controls more than one cell, then the signalling should further include an indication of the cell ID which is requested to avoid the indicated precoder(s).

### Example 3 - Precoders Being Used

The first base station indicates, by transmitting a message over the X2 interface (as indicated by step S10 in Figure 1), one or more precoders that will be used (or are likely to be used) by the first base station. Typically, the precoders are those preferred by the user equipment served by the first base station. In this example, the first base station is not helped; the signalling only benefits the second base station (unless an acknowledgement message is also sent from the second base station to the first base station). However, if that were to occur, then some prioritization would need to be defined between the first and second base stations in order to control which base station takes priority in the scheduling decisions.

The second base station can then avoid scheduling user equipment in its cell which indicate that their "worst companion" precoder (i.e. the precoder that would give the worst interference) for a cell controlled by the first base station is one of the precoder(s) indicated by the first base station. It will be appreciated that this signalling can be broadcast to all neighbour cells/base stations.

It will be appreciated that if the first base station controls more than one cell, the message should further include an indication of the cell ID which will use each of the indicated precoder(s).

This kind of signalling is well suited to fully distributed schedulers, since it only notifies neighbour cells about decisions taken by the scheduler in a cell, and leaves the resulting action entirely in the hands of the cells receiving the signalling. However, a drawback of this kind of signalling is that it is typically hard to predict which precoders will be used more than 1 or 2 subframes in advance. Consequently the signalling would have to be updated very frequently (e.g. every subframe/scheduling instant).

A variation of this example is for the first base station to indicate one or more precoders that might be used by the first base station. Typically, these will be the precoders that are most commonly preferred by the user equipment served by the first base station. This variation gives more freedom to the scheduler in the first base station, since it allows the first base station to indicate more precoders than will actually be used, but is more restrictive for the scheduler in the second base station since the second base station has to avoid a larger number of precoders if it wants to be sure of avoiding strong interference.

### Example 4 - Precoders Not Being Used

The first base station indicates, by transmitting a message over the X2 interface (as indicated by step S10 in Figure 1), one or more precoders that will not be used (or are not likely to be used) by the first base station. Typically, the precoders are those that are least commonly or never indicated as preferred precoders for the user equipment served by the first base station. In this example, the first base station is not helped; the signalling only benefits the second base station (unless similar signalling is also sent from the second base station to the first base station). The second base station can freely schedule user equipment in its cell which indicate that their "worst companion" precoder (i.e. the precoder that would give the worst interference) for a cell controlled by the first base station is one of the precoder(s) indicated by the first base station. It will be appreciated that this message can be broadcast to all neighbour cells/base stations.

It will be appreciated that if the first base station controls more than one cell, the message should further include an indication of the cell ID which will not use each of the indicated precoder(s).

This kind of signalling is well suited to fully distributed schedulers, since it only notifies neighbour cells about decisions taken by the scheduler in a cell, and leaves the resulting action entirely in the hands of the cells receiving the signalling. In terms of flexibility/restrictiveness to the schedulers in the two base stations, this kind of signalling is similar to the "variation" of example 3.

### Combined Approaches

It will be appreciate that the above 4 examples are not mutually exclusive; more than one of the signalling methods could be used simultaneously, either with multiple signalling messages, or with a signalling message that includes information corresponding to more than one of the examples.

In any of the 4 above examples, the second base station typically needs to know the time/frequency resources to which each indication relates. This can be either specified or indicated in the signalling message itself, or a combination of the two. In the frequency domain, each indication relates to a frequency interval, which may be either the whole system bandwidth ("wideband"), or a sub-band (a set of 1 or more PRBs). In the time domain, each indication relates to a time interval, which may be either a subframe, or a group of subframes

Also, each of the messages typically encode an index to an entry in a table maintained by both base stations which stores those precoders' parameters, rather than encoding the parameters themselves.

### Message Content and Formatting

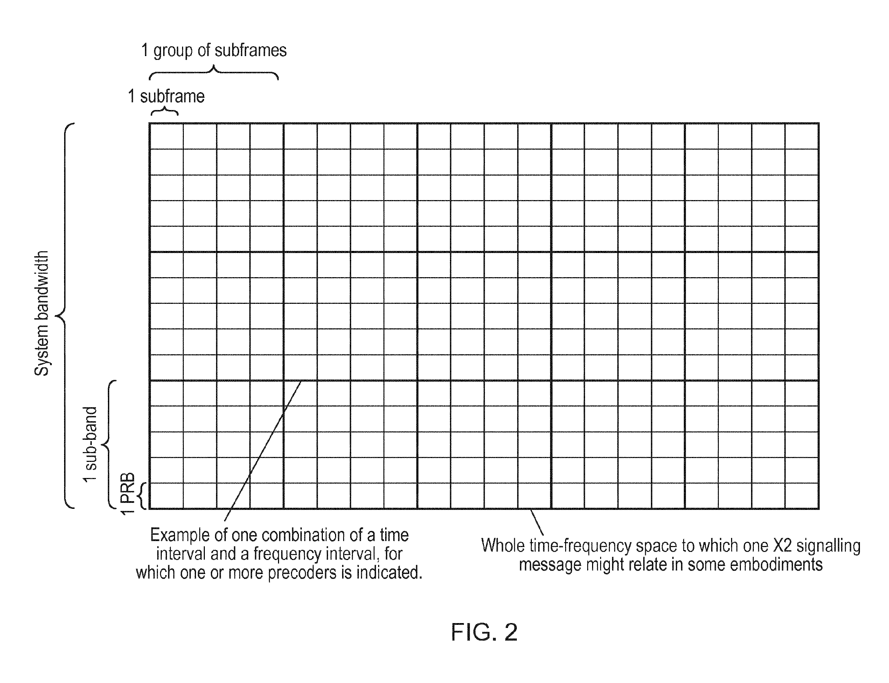

The subdivision of the time-frequency space is illustrated in Figure 2.

In one example, a sequence of precoders corresponding to successive time intervals for the next N time intervals could be indicated in the messages, enabling the schedulers to schedule different user equipment in different time intervals, such that user equipment with suitable preferred (or worst companion) precoders are scheduled in appropriate time intervals. For example, a time interval could be 1 subframe, and N=40. The message from the first base station to the second base station could include a list of precoders to avoid in each of the next 40 subframes.

In other examples, the indicated precoders could be assumed by the second base station to remain valid until further notice, or for a predetermined (or signalled) time period.

In any case there is typically little benefit updating the X2 signalling more often than the interval between PMI feedbacks configured for the user equipment in the cells controlled by the first base station.

The indicators of precoders would typically be assembled by the first base station after making scheduling decisions (or provisional scheduling decisions) for the user equipment it is serving. The PMI feedback from its user equipment on which these decisions are based, may be sub-band or wideband. In case of sub-band feedback, the precoder information signalled from the first base station to the second base station may therefore be derived from the feedback of different user equipment. However, this would typically be invisible to the second base station, since the second base station does not need to know which user equipment the precoding indicators relate to in the cell of the first base station.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of facilitating coordinated multipoint downlink transmissions by base stations of a wireless telecommunications network, said method comprising:
transmitting a message between said base stations, said message indicating a utilisation associated with at least one precoder for said downlink transmissions by at least one of said base stations.

2. The method of claim 1, wherein said message is transmitted from said first base station.

3. The method of claim 1 or 2, wherein said utilisation indicates a likelihood of said at least one precoder being utilised by said first base station for said downlink transmissions.

4. The method of any preceding claim, wherein said utilisation indicates said at least one precoder will be utilised by said first base station for said downlink transmissions.

5. The method of any preceding claim, wherein said utilisation indicates said at least one precoder will not be utilised by said first base station for said downlink transmissions.

6. The method of any preceding claim, wherein said message is transmitted from a first base station to a second base station.

7. The method of any preceding claim, wherein said utilisation indicates that use of said at least one precoder by said second base station for said downlink transmissions is to be avoided.

8. The method of any preceding claim, wherein said utilisation indicates that use of said at least one precoder by said second base station for said downlink transmissions is advisable.

9. The method of any preceding claim, comprising the step of adapting selection of precoders utilised by a second base station based on said message.

10. The method of any preceding claim, comprising the step of transmitting an acknowledgement message from said second base station in response to said message, said acknowledgement message indicating a utilisation associated with said at least one precoder for said downlink transmissions by said second base station.

11. The method of any preceding claim, wherein said utilisation indicates that use of said at least one precoder by said second base station for said downlink transmissions will be avoided.

12. The method of any preceding claim, wherein said utilisation indicates said at least one precoder will be utilised by said second base station for said downlink transmissions.

13. The method of any preceding claim, comprising the step of adapting selection of precoders utilised by said first base station based on said acknowledgement message.

14. The method of any preceding claim, wherein at least one of said message and said acknowledgement message comprises at least one of a cell identifier, a time interval and a frequency component associated with said utilisation associated with said at least one precoder.

15. A base station operable to facilitate coordinated multipoint downlink transmissions, said base station comprising:
transmission logic operable to transmit a message, said message indicating a utilisation associated with at least one precoder for said downlink transmissions by said base station.
